# EUROPÄISCHE PATENTSCHRIFT

(11) **EP 0 951 204 B1**
(45) Veröffentlichungstag und Bekanntmachung des Hinweises auf die Patenterteilung: **17.09.2003**
(21) Anmeldenummer: 99106892.5
(22) Anmeldetag: 08.04.1999
(51) Int. Cl.: H05B 41/285

(54) **Vorschaltgerät**
Ballast
Ballast

(30) Priorität: 16.04.1998 DE 19816815
(43) Veröffentlichungstag der Anmeldung: 20.10.1999
(73) Patentinhaber: Vossloh-Schwabe Elektronik GmbH, 73660 Urbach (DE)
(72) Erfinder:
(74) Vertreter: Patentanwälte Rüger, Barthelt & Abel

(56) Entgegenhaltungen:
- EP-A- 0 395 159
- EP-A- 0 558 772
- DE-A- 19 518 096

## Beschreibung

Die Erfindung betrifft ein Vorschaltgerät, das zum Parallelbetrieb von Entladungslampen eingerichtet und insbesondere für sicherheitsrelevante Umgebungen vorgesehen ist.

Elektrische Betriebsmittel werden in explosionsgefährdeten Umgebungen in der Regel in speziell für den Anwendungszweck geeigneten Gehäusen betrieben, die möglichst eine von den Betriebsmitteln ausgehende Zündung explosionsfähiger oder brennbarer Gas-Luftgemische verhindern. Dennoch besteht die Forderung, dass von den Betriebsmitteln keine Zündungen ausgehen sollen, auch wenn sie in entsprechenden Gehäusen gehalten sind. Dazu gehört auch, dass keine unzulässigen Spannungen auftreten.

Leuchtstofflampen und Gasentladungslampen allgemein haben eine begrenzte Lebensdauer. Im Fehlerfalle oder gegen Ende ihrer Lebensdauer zünden sie womöglich nicht mehr oder nicht mehr sicher. In solchen Fällen muss sichergestellt werden, dass an der Gasentladungslampe nicht auf Dauer zu hohe Spannungen, beispielsweise Zündspannungen, anliegen. Andererseits sollen an einem Vorschaltgerät häufig mehrere Lampen betrieben werden, um bei Ausfall einer Lampe die Leuchte insgesamt, wenn auch mit verminderter Helligkeit, weiterleuchten zu lassen. Die Lampen einer Leuchte sollen aus Wirtschaftlichkeitsgründen jedoch möglichst von einem gemeinsamen Vorschaltgerät gespeist werden.

Dazu ist aus der EP 558 772 A1 eine Schaltungsanordnung zum Betreiben mehrerer Leuchtstofflampen mit einem einzigen Vorschaltgerät bekannt. Das Vorschaltgerät weist einen Wechselrichter auf, der eine symmetrische Wechselspannung mit festgelegter Frequenz abgibt. An den Wechselrichter sind parallel jeweils über strombegrenzende Vorschaltdrosseln zwei Leuchtstofflampen angeschlossen. Beide Leuchtstofflampen sind mit einer Überwachungseinrichtung verbunden, die feststellt, ob an einer der Leuchtstofflampen die Zündspannung länger als eine vorgegebene Zeitspanne T1 anliegt. Ein Umschaltrelais zwischen den Leuchtstofflampen und den Vorschaltdrosseln ermöglicht es, beide Leuchtstofflampen parallel an eine der Vorschaltdrosseln anzuschalten. Stellt die Überwachungseinrichtung nun den Fehlerzustand fest, bei dem die Zündspannung an einer der Leuchtstofflampen länger als die vorgegebene Zeitspanne anliegt, wird dies als Fehlerfall interpretiert. Das Umschaltrelais, das ansonsten die beiden Leuchtstofflampen jeweils individuell in Reihe mit den ihnen zugeordneten Vorschaltdrosseln schaltet, schaltet nun die Leuchtstofflampen parallel zueinander an eine der Vorschaltdrosseln.

Damit erhält die nicht gezündete Leuchtstofflampe lediglich noch die Brennspannung der gezündeten Leuchtstofflampe. Dies bedeutet aber auch, dass. die nicht gezündete Leuchtstofflampe nicht spannungsfrei ist. Außerdem ist ein mechanisches Relais erforderlich.

Aus der EP-A-0395159 ist eine Wechselrichterschaltung zum Betrieb zweier Gasentladungslampen bekannt. Die Wechselrichterschaltung enthält zwei Wechselrichter-Halbbrücken, die jeweils einer Gasentladungslampe individuell zugeordnet sind. Jeder Wechselrichter-Halbbrücke weist jeweils zwei Schaltelemente auf. Außerdem ist beiden Gasentladungslampen ein Brückenzweig gemeinsam zugeordnet, der zwei Kondensatoren enthält. Die Gasentladungslampen werden durch entsprechende Überwachungsschaltungen individuell überwacht, wobei die entsprechend zugeordneten Wechselrichter-Brücken dann individuell angesteuert werden.

Es ergibt sich ein relativ hoher Schaltungsaufwand mit mindestens vier aktiven Schaltelementen in den Wechselrichter-Brückenzweigen.

Im Weiteren ist aus der DE-A-19518096 ein elektronisches Vorschaltgerät bekannt, das zum Betrieb von zwei Gasentladungslampen eingerichtet ist. Das Vorschaltgerät weist eine Wechselrichter-Halbbrücke auf, die beide Gasentladungslampen mit Spannung versorgt. Zum Deaktivieren einer nicht zündfähigen Lampe ist eine Schaltung vorgesehen, die die Zündimpulse von der defekten Lampe fernhält.

Mit dieser Maßnahme kann keine Spannungsfreiheit einer defekten Lampe garantiert werden.

Es ist Aufgabe der Erfindung, durch Lampen und deren Vorschaltgeräte auftretende Gefährdungen, insbesondere in explosionsgefährdeten Umgebungen, zu minimieren, und dabei eine Schaltung mit vermindestern Bauelementeaufwand anzugeben.

Diese Aufgabe wird durch ein Vorschaltgerät mit den Merkmalen des Patentanspruchs 1 gelöst.

Das erfindungsgemäße Vorschaltgerät gestattet es, die an einer ausgefallenen Leuchtstofflampe anliegende Spannung auf Null zu vermindern, wenn die Lampe nicht gezündet hat. Dazu weist das Vorschaltgerät erfindungsgemäß einen Wechselrichter mit mehreren Leitungszweigen auf, von denen wenigstens ein Leitungszweig beiden Lampen gemeinsam und wenigstens zwei Leitungszweige beiden Lampen jeweils gesondert zugeordnet sind. Ein solcher Wechselrichter lässt sich, anders als zwei voneinander vollkommen unabhängige unvermaschte Wechselrichter, Bauelemente sparend aufbauen. Dies dient zum einen der Betriebssicherheit des Vorschaltgeräts, weil mit sinkender Bauelementezahl Ausfälle weniger wahrscheinlich werden. Zum anderen stellt dies eine Kosten- und Platzersparnis dar. Eine geringe Anzahl von Schaltelementen in dem Wechselrichter wirkt sich vereinfachend auf die Ansteuerschaltung aus.

Das Vorschaltgerät enthält vorzugsweise eine netzgespeiste Spannungsquelle, die eine vorgebbare oder eine vorgegebene Gleichspannung abgibt. Damit kann sichergestellt werden, dass die an einer Lampe umgesetzte Leistung sich nicht verändert, wenn die jeweils andere Lampe ausfällt.

In einer besonders einfachen Bauform wird der Wechselrichter durch zwei Halbbrücken gebildet, die ein Schaltelement gemeinsam nutzen. Auf diese Weise können zwei oder mehrere Halbbrücken zusammengefasst werden, wobei für jede weitere Halbbrücke jeweils lediglich ein zusätzliches Schaltelement und gegebenenfalls ein Entkopplungselement zweckmäßig ist. Als solche können beispielsweise Dioden dienen. Der Wechselrichter wird dabei insgesamt durch drei Schalttransistoren und zwei Entkopplungsdioden gebildet.

Jeder Entladungslampe kann jeweils separat eine Zündschaltung zugeordnet sein. Diese gibt bis zum Zünden der Entladungslampe und/oder bis zum Ablauf einer maximalen Zünddauer Hochspannungs- oder Zündspannungsimpulse an die Entladungslampe. Damit können beide Entladungslampen unabhängig voneinander zünden.

Das erfindungsgemäße Wechselrichterkonzept ist so ausgeführt, dass die Entladungslampen mit separaten Strombegrenzungen, bspw. Drosseln versehen sind. Dies ist im Hinblick auf den Ausfall einer der Entladungslampen besonders zweckmäßig, weil die verbleibende Lampe dann mit der vorgegebenen Leistung weiterbrennt. Dabei ermöglicht es das erfindungsgemäße Wechselrichterkonzept, für beide Entladungslampen mit einer einzigen Ansteuerschaltung auszukommen, die den Wechselrichter ansteuert. Das Vorschaltgerät wird vorzugsweise mit einer Festfrequenz betrieben, die zum Zünden zu einer anderen Frequenz hin verschoben wird. Die Entladungslampe ist dabei vorzugsweise in einem Resonanzkreis angeordnet, der beim Zünden in der Nähe seiner Resonanzfrequenz und bei normalem Lampenbetrieb abseits davon arbeitet. Es besteht jedoch auch die Möglichkeit, bei entsprechender Auslegung des Lampenkreis nur mit einer festen Frequenz des Lampenkreises zu arbeiten. Das Überwachen der Zündung der einzelnen Entladungslampen ist möglich, indem in jedem Lampenzweig die Lampenspannung oder eine dieser entsprechende Spannung abgegriffen wird. Vorzugsweise ist jeder Entladungslampe eine gesonderte, zu der Überwachungsschaltung gehörige Monitoreinrichtung zugeordnet, die überprüft, wie lange die durch Resonanzüberhöhung erzeugte Zündspannung an der Entladungslampe anliegt. Übersteigt die Zeit ein festgesetztes Limit, wird der betreffende lampenspezifische Zweig des Wechselrichters stillgesetzt.

Es ist sowohl möglich, die Spannungsüberwachung in dem Zeitfenster auszuführen, in dem mit Zündfrequenz gearbeitet wird, als auch die Überwachung über das Zeitfenster hinaus fortzusetzen oder erst danach zu beginnen. Jedenfalls wird zu wenigstens einem Zeitpunkt überprüft, ob die Lampenspannung auf die Brennspannung, d.h. unterhalb einen über der Brennspannung liegenden Wert zusammengebrochen ist. Wenn nicht, gilt die Entladungslampe als nicht gezündet.

Die Überwachungsschaltung verharrt nach einmaliger Erkennung eines Zustands, bei dem eine Entladungslampe nicht zündet, in ihrem Sperrzustand. Dieser Zustand wird vorzugsweise solange beibehalten, bis die Netzspannung von dem Vorschaltgerät getrennt wird. Dies kann mit einer entsprechenden netzbetätigten Rücksetzeinrichtung erfolgen. Dabei ist es möglich, das Rücksetzen nur auszulösen, wenn die Netzspannung eine Mindestzeit unterbrochen war. Dazu kann ein Zeitglied dienen.

Bedarfsweise kann die Überwachungsschaltung auch durch andere Mittel, beispielsweise einen gesonderten Schalter oder eine Erkennungseinrichtung, zurückgesetzt werden, die das Auswechseln der Entladungslampe erkennt.

Eine Anzapfschaltung zur Spannungsversorgung der Ansteuerschaltung ist vorzugsweise wenigstens doppelt ausgeführt und an die lampenspezifischen Zweige des Wechselrichters angeschlossen. Die Anzapfschaltung zeigt an ihrem Eingang in der Regel kapazitives Verhalten. Durch das Anschalten an die lampenspezifischen Zweige wird die kapazitive Belastung des gemeinsam genutzten Wechselrichterzweiges gering gehalten, was dessen Schaltverluste in Grenzen hält bzw. minimiert. Dies gilt insbesondere bei Ausführungsformen mit Entkopplungselementen zwischen der Lampendrossel und dem Schaltelement des gemeinsamen Zweigs des Wechselrichters.

Die Vorteile des erfindungsgemäßen Vorschaltgeräts kommen insbesondere bei solchen Vorschaltgeräten zum Tragen, die für Direktzündung der Entladungslampen ohne Vorheizen der Elektroden eingerichtet sind. Hier können erhebliche Zündspannungsüberhöhungen auftreten, die zum ungeheizten Zünden der Entladungslampen erforderlich sind. Für den Betrieb in explosionsgefährdeten Umgebungen ist es hier von besonderem Vorteil, wenn der permanente Bestand solcher Spannungsüberhöhungen vermieden werden kann.

Weitere vorteilhafte Einzelheiten von Ausführungsformen der Erfindung sind Gegenstand von Unteransprüchen und ergeben sich aus der Zeichnung und/oder der zugehörigen Beschreibung.

In der Zeichnung ist ein Ausführungsbeispiel der Erfindung dargestellt. Es zeigen:

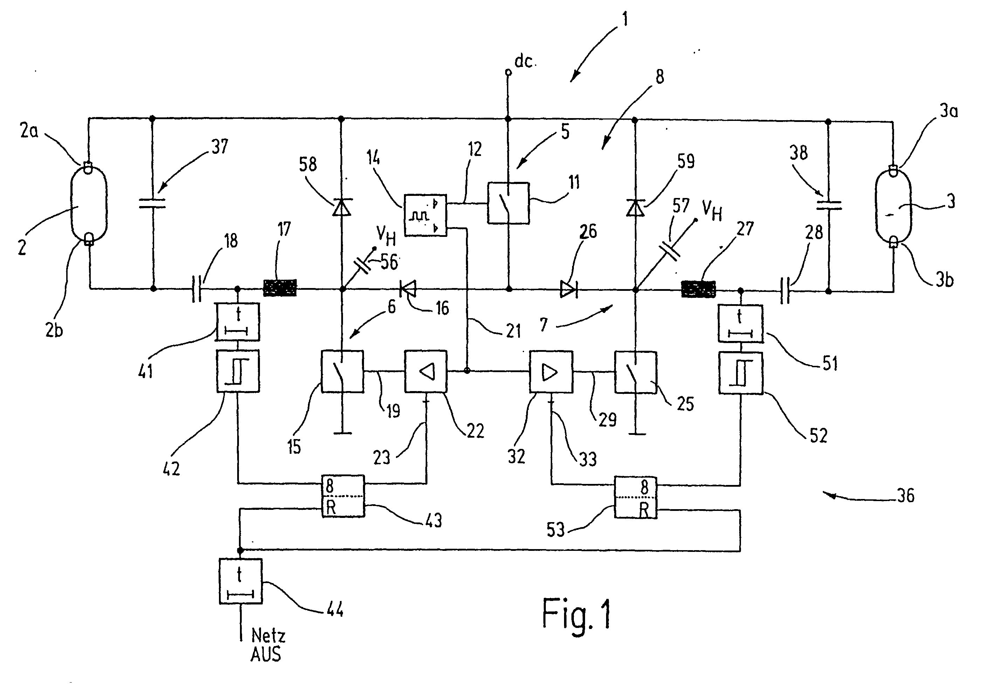

Fig. 1 das erfindungsgemäße Vorschaltgerät in einem ausschnittsweisen Blockschaltbild als Prinzipdarstellung.

### Beschreibung:

In Fig. 1 ist ein Vorschaltgerät 1 zum Betrieb zweier Entladungslampen 2, 3 veranschaulicht. Die Entladungslampen 2, 3 sind Niederdruck-Gasentladungslampen, beispielsweise Leuchtstofflampen mit wendelförmigen Elektroden. Das Vorschaltgerät 1 und die Entladungslampen 2, 3 sind für den Einsatz in explosionsgefährdeten Bereichen vorgesehen. Um auf ein Vorheizen der Elektroden 2a, 2b, 3a, 3b der Entladungslampen 2, 3 verzichten zu können, ist das Vorschaltgerät 1 für die Zündung der Entladungslampen 2, 3 mittels Spannungsdurchschlag eingerichtet. Entsprechend sind die Elektroden 2a, 2b, 3a, 3b außerhalb der Entladungslampen 2, 3, beispielsweise in den Lampenfassungen, kurzgeschlossen.

Der Spannungsversorgung der Entladungslampen 2, 3 dient das Vorschaltgerät 1, das einen im vorliegenden Ausführungsbeispiel aus drei Leitungszweigen 5, 6, 7 gebildeten Wechselrichter 8 aufweist. Der Leitungszweig 5 ist unmittelbar mit einer Versorgungsspannung VDC verbunden, die von nicht weiter veranschaulichten Schaltungsteilen aufgebaut und beispielsweise aus einer Netzspannung abgeleitet wird. Die Versorgungsspannung VDC ist eine Gleichspannung mit vorzugsweise konstanter Größe. Mit der Versorgungsspannung VDC sind außerdem die Elektroden 2a, 3a der Entladungslampen 2, 3 verbunden. In dem Leitungszweig 5 ist ein Schalttransistor 11 angeordnet, der beispielsweise ein Bipolartransistor oder ein MOS-Fet sein kann. Seine Steuerelektrode 12 ist mit einer Ansteuerschaltung 14 verbunden, die eine Wechselspannung abgibt, deren Frequenz für den Betrieb der Lampen einen ersten vorgegebenen festen Wert und für das Zünden der Entladungslampen 2, 3 einen davon verschiedenen zweiten vorgegebenen Wert annimmt. Das Schaltelement 11 des Leitungszweiges 5 öffnet und schließt dementsprechend im Takt der zeitsymmetrischen Ansteuerspannung.

Der Leitungszweig 5 ist beiden Entladungslampen 2, 3 gemeinsam zugeordnet. Mit dem Leitungszweig 5 ist der Leitungszweig 6 in Reihe gegen Masse geschaltet. Der Leitungszweig 6 enthält ein Schaltelement 15, das durch einen Schalttransistor, beispielsweise einen Bipolartransistor oder einen MOS-Fet oder eine anderweitigen Feldeffekttransistor gebildet sein kann. Mit dem Schaltelement 15 ist eine Entkopplungsdiode 16 in Reihe geschaltet, deren Polung so gewählt ist, dass bei leitendem Schaltelement 11 ein Stromfluss über den Leitungszweig 5 zu der Entladungslampe 2 möglich ist. Im vorliegenden Beispiel liegt die Kathode von 16 an dem Schaltelement 15. Der Verbindungspunkt zwischen der Kathode der Diode 16 und dem Schaltelement 15 ist über eine Strombegrenzungsdrossel 17 und einen Koppelkondensator 18 an die Elektrode 2b der Entladungslampe 2 geschaltet.

Der Leitungszweig 6 ist allein der Entladungslampe 2 zugeordnet. Zur Ansteuerung seines Schaltelements 15 ist an dessen Steuerelektrode 19 zum Betrieb der Entladungslampe 2 die von der Ansteuerschaltung 14 abgegebene Wechselspannung angelegt. Diese ist über eine entsprechende Leitung 21 und eine Torschaltung 22 der Steuerelektrode 19 zugeführt. Die Torschaltung 22 kann durch ein Gatter, einen steuerbaren Verstärker oder einen elektronischen Schalter gebildet sein. Sie weist einen Sperreingang 23 auf, der, wenn er mit einem Sperrsignal versorgt wird, den Ausgang der Torschaltung 22 und somit den Steuereingang 19 des Schaltelementes 15 auf ein Potenzial legt, bei dem das Schaltelement 15 sicher sperrt.

Der Leitungszweig 7 ist der Entladungslampe 3 zugeordnet. Er weist ein Schaltelement 25 und ein mit diesem in Flussrichtung in Reihe geschaltetes Entkopplungselement 26 auf, das im vorliegenden Beispiel durch eine Diode gebildet wird. An dem Verbindungspunkt zwischen der Diode 26 und dem Schaltelement 25 ist über eine Entkopplungsdrossel 27 und einen Koppelkondensator 28 die Entladungslampe 3, d.h. deren Elektrode 3b, angeschlossen.

Das Schaltelement 25 weist einen Steuereingang 29 auf, der über eine Torschaltung 32 mit der Leitung 21 und somit mit der von der Ansteuerschaltung 14 abgegebenen Steuerwechselspannung verbunden ist. Auch die Torschaltung 32 weist einen Steuereingang 33 auf, der, wenn er aktiviert wird, den Ausgang der Torschaltung auf ein Potential gehen lässt, bei dem das Schaltelement 25 sicher gesperrt ist.

Die Schaltelemente 15, 25 werden synchron zueinander gegenphasig zu dem Schaltelement 11 angesteuert. Über die Torschaltungen 22, 32 sind die Leitungszweige 6, 7 unabhängig voneinander inaktivierbar bzw. aktivierbar, so dass die Entladungslampen 2, 3 unabhängig voneinander deaktivierbar sind.

Die Torschaltungen 22, 32 gehören zu einer Überwachungsschaltung 36, die die Lampenspannungen überwacht. Die an den Entladungslampen 2, 3 abfallenden Spannungen nehmen vor dem Zünden der Entladungslampen 2, 3 relativ hohe Werte an, die erforderlich sind, um in den Entladungslampen 2, 3 einen Spannungsdurchschlag herbeizuführen. Dazu sind den Entladungslampen 2, 3 Kondensatoren 37, 38 parallelgeschaltet, die bei einer beispielsweise oberhalb der normalen Betriebsfrequenz liegenden Frequenz mit den Strombegrenzungsdrosseln 17, 27 einen Reihenresonanzkreis bilden. Entsprechend tritt an den Elektroden 2b, 3b eine Spannungsüberhöhung auf, wenn die von dem Wechselrichter 8 abgegebene Frequenz im Bereich der Resonanzfrequenz liegt und wenn die Entladungslampen 2, 3 noch nicht gezündet sind. Diese überhöhte Spannung liegt an beiden Seiten des Koppelkondensators 18 an. Sie wird im vorliegenden Beispiel an den Strombegrenzungsdrosseln 17, 27 von der Überwachungsschaltung 36 abgegriffen. Dazu ist der Verbindungspunkt zwischen der Strombegrenzungsdrossel 17 und dem Koppelkondensator 18 beispielsweise mit einer Zeitüberwachungsbaugruppe 41 verbunden. Diese enthält einen Gleichrichter, der die an dem Verbindungspunkt abgegriffene Wechselspannung in eine Gleichspannung umwandelt. Außerdem enthält die Zeitüberwachungsbaugruppe 41 einen Schwellwertschalter, der ein Signal abgibt, wenn die gleichgerichtete Wechselspannung einen Schwellwert überschreitet. Der Schwellwert ist so festgelegt, dass er deutlich unterschritten ist, wenn die Entladungslampe 2 im Brennbetrieb arbeitet, jedoch deutlich überschritten ist, wenn an der Entladungslampe 2 Zündspannung anliegt. Auf den Schwellwertschalter folgt ein Zeitglied, das bei Überschreiten des Schwellwerts ausgelöst wird und an dem Ausgang der Überwachungsbaugruppe 41 ein Signal abgibt, wenn die Überschreitung des Schwellwerts länger als eine voreingestellte Zeit t gedauert hat.

An die Zeitüberwachungsschaltung 41 ist gegebenenfalls über einen Schwellwertschalter 42 ein als Speicher dienendes RS-Flipflop 43 mit einem Setzeingang angeschlossen. Der Ausgang ist mit dem Steuereingang 23 der Torschaltung 22 verbunden. Die RS-Flipflopschaltung weist außerdem einen Rücksetzeingang auf, der mit einer Rücksetzschaltung 44 verbunden ist. Diese gibt ein Rücksetzsignal ab, wenn die Netzspannung länger als eine vorbestimmte Zeitspanne abgeschaltet war.

Zur Überwachung des Zündens der Entladungslampe 3 weist die Überwachungsschaltung 36 entsprechende Baugruppen, nämlich eine Zeitüberwachungsschaltung 51 und eine nachgeschaltete Schwellwertschaltung 52 sowie ein RS-Flipflop 53 auf. Die Verschaltung entspricht der Verschaltung der Elemente zur Überwachung der Entladungslampe 2.

Die Zeitüberwachungsschaltung 41, 51 kann intern auch anderweitig beschaffen sein. Wesentlich ist, dass sie an ihrem Ausgang ein Signal abgibt, wenn die Zündspannung länger als eine vorbestimmte Zeit an der jeweiligen Entladungslampe 2, 3 anliegt. Dies kann beispielsweise auch durch eine Schaltung erreicht werden, die nach dem Einschalten der Netzspannung für eine voreinstellbare oder voreingestellte Zeitspanne t kein Signal durchlässt und erst nach Ablauf dieser Zeitspanne an ihrem Ausgang ein Signal abgibt, dessen Größe der an ihrem Eingang anliegneden Wechselspannung entspricht. Das Ausgangssignal wird dann von den Schwellwertschaltern 42, 52 daraufhin geprüft, ob es über oder unterhalb einer Schaltschwelle liegt.

Die Überwachungsschaltung 36 und die Ansteuerschaltung 14 benötigen eine Betriebsspannung, die deutlich unter der Betriebsspannung VDC des Wechselrichters 8 liegt. Zur Erzeugung dieser Hilfsspannung VH sind die Leitungszweige 6 und 7 jeweils mit einem Kondensator 56, 57 angezapft, der mit einem Ende an den Verbindungspunkt zwischen der jeweiligen Diode 16, 26 und dem Schaltelement 15, 25 angeschlossen ist. Von diesem Punkt aus führt außerdem jeweils eine Freilaufdiode 58, 59 gegen die Betriebsspannung VDC des Wechselrichters 8. Durch den Anschluss der Anzapfkondensatoren 56, 57 unmittelbar an ein Ende der Strombegrenzungsdrosseln 17, 27 wird die kapazitive Belastung des Schaltelements 11 gering gehalten, was dessen Schaltverluste minimiert.

Das insoweit beschriebene Vorschaltgerät arbeitet wie folgt:

Wird die Netzspannung eingeschaltet, entsteht an dem Eingang des Wechselrichters 8 die Spannung VDC. Über eine Startschaltung erhält die Ansteuerschaltung 14 und die Überwachungsschaltung 36 Betriebsspannung. Die Ansteuerschaltung 14 arbeitet nun zunächst mit einer Zündfrequenz, mit der der Wechselrichter 8 angesteuert wird. Die Zeitgeberschaltung 44 überführt die RS-Flipflops 43, 53 beim Einschalten in einen definierten Zustand, in dem sie die Torschaltungen 22, 32 freigeben. Damit gelangen die Ansteuerimpulse aus der Ansteuerschaltung 14 zu den Schaltelementen 15, 25. Das Schaltelement 11 arbeitet im Gegentakt zu den Schaltelementen 15, 25 mit der Zündfrequenz, bei der die aus den Vorschaltdrosseln 17, 27 und den Kondensatoren 37, 38 gebildeten Reihenresonanzkreise in Resonanz kommen. An den Entladungslampen 2, 3 entsteht durch Resonanzüberhöhung an den Reihenresonanzkreisen eine relativ hohe Zündspannung. Diese führt innerhalb einer vorgegebenen Zündzeit bei betriebsfähigen Entladungslampen 2, 3 zum Spannungsdurchschlag und somit zum Zünden derselben.

Nach Ablauf einer eingestellten Zeit t, die vorzugsweise etwas kleiner ist als die Zeit, für die die Antsteuerschaltung 14 Ansteuerimpulse mit Zündfrequenz liefert, die bedarfsweise aber auch gleich oder größer als diese Zeit sein kann, überprüft die Überwachungsschaltung 36 die Spannung an den Entladungslampen 2, 3 bzw. den Koppelkondensatoren 18, 28. Ist die Spannung deutlich größer als die Brennspannung einer gezündeten Entladungslampe 2, 3, wird dies als Signal dafür gewertet, dass die Entladungslampe 2 oder 3 nicht gezündet hat. Entsprechend erhält das entsprechende RS-Flipflop 43 oder 53 ein Setzsignal, woraufhin es die jeweils zugeordnete Torschaltung 22, 32 abschaltet. In der Folge erhält bei Nichtzündung der Entladungslampe 2 das Schaltelement 15 und bei Nichtzündung der Entladungslampe 3 das Schaltelement 25 keine Ansteuerimpulse mehr. Die betreffende Entladungslampe 2 oder 3 wird somit nicht mehr mit Spannung versorgt und die über der jeweiligen Entladungslampe 2, 3 abfallende Spannung wird zu null, während die jeweils andere Entladungslampe 2, 3 unverändert weiter brennt, wenn sie gezündet hat.

Bei einem Vorschaltgerät zum Parallelbetrieb von Entladungslampen 2, 3 in explosionsgefährdeten Bereichen ist ein Wechselrichter 8 vorgesehen, der einen beiden Entladungslampen 2, 3 zugeordneten und insoweit doppelt genutzten Zweig 5 und zwei lampenspezifische Zweige 6, 7 aufweist, die separat abschaltbar sind, falls an der zugeordneten Entladungslampe 2 oder 3 ein Fehler auftritt.

## Patentansprüche

1. Vorschaltgerät (1) zum Parallelbetrieb von Entladungslampen (2, 3), insbesondere für explosionsgefährdete Umgebungen.
mit einem Wechselrichter (8), der in seinen Leitungszweigen (5, 6, 7) über Steuereingänge gesteuerte Schaltelemente (11, 15, 25) enthält,
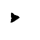 wobei wenigstens zwei Leitungszweige (6, 7) vorgesehen sind, die jeweils nur einer der Gasentladungslampen (2 oder 3) zugeordnet sind,
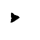 wobei ein Leitungszweig (5) vorgesehen ist, der beiden Gasentladungslampen (2, 3) gemeinsam zugeordnet ist und der ein einziges Schaltelement (11) beinhaltet und
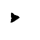 wobei die den Entladungslampen (2, 3) individuell zugeordneten Zweige (6, 7) mit dem gemeinsamen Zweig (5) über Entkopplungselemente (16, 26) verbunden sind,
mit einer Ansteuerschaltung (14), die an die Steuereingänge des Wechselrichters (8) angeschlossen ist und die Schaltelemente (11, 15, 25) ein- und ausschaltet,
mit einer Überwachungsschaltung (36), die die Lampenspannungen unabhängig voneinander daraufhin überwacht, ob die Zündspannung länger als eine vorbestimmte Zeitspanne anliegt, und die die Ansteuerung wenigstens des Schaltelements (15 oder 25) durch die Ansteuerschaltung (14) sperrt, das in dem der Entladungslampe (2, 3) zugeordneten Leitungszweig (6, 7) angeordnet ist, an der eine die Brennspannung übersteigende Spannung zu einem Zeitpunkt erfasst worden ist, der um eine Zeitspanne nach dem Einschalten liegt, die größer als eine gegebene Zündzeit ist.

2. Vorschaltgerät nach Anspruch 1, **dadurch gekennzeichnet, dass** die erfasste, die Brennspannung überschreitende Spannung vorzugsweise etwa mittig zwischen der Brennspannung der Entladungslampe (2, 3) und der Zündspannung liegt.

3. Vorschaltgerät nach Anspruch 1, **dadurch gekennzeichnet, dass** das Vorschaltgerät (1) eine Spannungsquelle enthält, die eine vorgegebene Gleichspannung abgibt.

4. Vorschaltgerät nach Anspruch 1, **dadurch gekennzeichnet, dass** der gemeinsame Zweig (5) sowohl Teil einer ersten Halbbrücke zur Versorgung einer ersten Entladungslampe (2) als auch Teil wenigstens einer weiteren Halbbrücke ist, die der Versorgung wenigstens einer weiteren Entladungslampe (3) dient.

5. Vorschaltgerät nach Anspruch 1, **dadurch gekennzeichnet, dass** die Entkopplungselemente (16, 26) Dioden sind.

6. Vorschaltgerät nach Anspruch 1, **dadurch gekennzeichnet, dass** jeder Entladungslampe (2, 3) eine separate Zündschaltung zugeordnet ist.

7. Vorschaltgerät nach Anspruch 1, **dadurch gekennzeichnet, dass** jeder Entladungslampe (2, 3) ein separates Strombegrenzungsmittel (17, 27) zugeordnet ist.

8. Vorschaltgerät nach Anspruch 1, **dadurch gekennzeichnet, dass** jeder Entladungslampe (2, 3) ein zu der Überwachungsschaltung (36) gehörige Monitoreinrichtung (41, 51) zugeordnet.

9. Vorschaltgerät nach Anspruch 1, **dadurch gekennzeichnet, dass** die Überwachungsschaltung (36) eine Speichereinrichtung (43, 53) enthält, mit der ein Sperrzustand beibehaltbar ist, in den die Überwachungseinrichtung den lampenspezifischen Teil des Wechselrichters (8) nach einmaliger Erkennung eines Fehlerzustands überführt.

10. Vorschaltgerät nach Anspruch 1, **dadurch gekennzeichnet, dass** die Überwachungsschaltung (36) mit einer Rücksetzeinrichtung (44) verbunden ist, mit der der Wechselrichter (8) nach teilweiser Sperrung infolge eines Fehlers an der Entladungslampe (2, 3) reaktivierbar ist.

11. Vorschaltgerät nach Anspruch 1, **dadurch gekennzeichnet, dass** an die lampenspezifischen Zweige (6, 7) des Wechselrichters (8) jeweils eine Anzapfschaltung (56, 57) angeschlossen ist, die der Stromversorgung der Ansteuerschaltung (14) dient.

12. Vorschaltgerät nach Anspruch 1, **dadurch gekennzeichnet, dass** das Vorschaltgerät (1) für das Zünden der Entladungslampen (2, 3) durch Spannungsdurchschlag bei kalten Elektroden (2a, 2b; 3a, 3b) eingerichtet ist.

## Claims

1. Ballast (1) for the operation in parallel of discharge lamps (2, 3), especially in environments with a high explosion risk, having
an inverter (8) whose branches (5, 6, 7) of the circuitry contain switching elements (11, 15, 25) that are controlled via control inputs,
• there being provided at least two branches (6, 7) which are each associated to a single one of the gas discharge lamps (2 or 3),
• there being provided one branch (5), which is associated to the two gas discharge lamps (2, 3) in common and which comprises a single switching element (11), and
• the branches (6, 7), which are associated to the discharge lamps (2, 3) individually, being connected with the common branch (5) via decoupling elements (16, 26),
a drive circuit (14) connected to the control inputs of the converter (8), which connects or disconnects the switching elements (11, 15, 25),
a monitoring circuit (36), which monitors the lamp voltages independently one from the other to determine if the ignition voltage is applied for a period longer than a predetermined period of time, which prevents driving of at least that switching element (15 or 25) by the drive circuit (15) which is arranged in the branch (6, 7) associated to the respective discharge lamp (2, 3) on which a voltage higher than the operating voltage has been detected at a point in time occurring after the switching-on moment and separated from the latter by a duration greater than a predetermined ignition time.

2. The ballast as defined in Claim 1, **characterised in that** the detected voltage, that exceeds the operating voltage, lies preferably approximately in the middle between the operating voltage on the discharge lamp (2, 3) and the ignition voltage.

3. The ballast as defined in Claim 1, **characterised in that** the ballast (1) comprises a voltage source supplying a predetermined direct voltage.

4. The ballast as defined in Claim 1, **characterised in that** the common branch (5) is both part of a first half-bridge intended to supply a first discharge lamp (2) and part of at least one further half-bridge intended to supply at least one additional discharge lamp (3).

5. The ballast as defined in Claim 1, **characterised in that** the decoupling elements (16, 26) are diodes.

6. The ballast as defined in Claim 1, **characterised in that** each discharge lamp (2, 3) has associated to it a separate ignition circuit

7. The ballast as defined in Claim 1, **characterised in that** each discharge lamp (2, 3) has associated to it separate current limiting means (17, 27).

8. The ballast as defined in Claim 1, **characterised in that** each discharge lamp (2, 3) has associated to it a monitoring system (41, 51) that is part of the monitoring circuit (36).

9. The ballast as defined in Claim 1, **characterised in that** the monitoring circuit (36) comprises storage means (43, 53) which is capable of maintaining a blocked condition into which the lamp-specific part of the rectifier (8) can be transferred by the monitoring device once a single error condition has been determined.

10. The ballast as defined in Claim 1, **characterised in that** the monitoring circuit (36) is connected to reset means (44) by means of which the inverter (8) can be reactivated after it has been partially blocked as a result of an error detected on the discharge lamp (2, 3).

11. The ballast as defined in Claim 1, **characterised in that** a tapping circuit (56, 57) serving as power supply for the drive circuit (14) is connected to each of the lamp-specific branches (6, 7) of the inverter (8).

12. The ballast as defined in Claim 1, **characterised in that** the ballast (1) is adapted for igniting the discharge lamps (2, 3) by a voltage surge when the electrodes (2a, 2b; 3a, 3b) are cold.

## Revendications

1. Ballast (1) pour le fonctionnement en parallèle de lampes à décharge gazeuse (2, 3), en particulier pour des atmosphères explosives, avec un onduleur (8) qui comporte dans ses branches de circuit (5, 6, 7) des entrées de commande pilotées par des éléments de commutation (11, 15, 25),
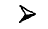 au moins deux branches de circuit (6, 7) étant prévues, qui sont associées chacune à seulement une lampe à décharge gazeuse (2 ou 3),
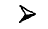 une branche de circuit (5) étant prévue, qui est commune aux deux lampes à décharge gazeuse (2, 3) et contient un élément de commutation unique et
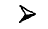 les branches de circuit (6, 7) associées individuellement aux lampes à décharge gazeuse (2, 3) étant connectées à la branche commune (5) par l'intermédiaire d'éléments de découplage (16, 26),
avec un circuit de commande (14) qui est connecté aux entrées de commande de l'onduleur (8) et met en et hors service les éléments de commutation (11, 15, 25),
avec un circuit de surveillance (36), qui surveille les tensions de lampe indépendamment les unes des autres afin de déterminer si la durée d'application de la tension d'amorçage est supérieure à une durée prédéterminée et, à l'aide du circuit de commande (14), bloque la commande d'au moins l'élément de commutation (15 ou 25), qui est disposé dans la branche de circuit (6, 7) associée à la lampe à décharge gazeuse (2, 3) pour laquelle une tension supérieure à la tension d'éclairage a été déterminée à un instant donné, postérieur d'un certain laps de temps à la mise sous tension, qui est plus grand qu'une durée d'amorçage définie.

2. Ballast selon la revendication 1, **caractérisé en ce que** la tension mesurée supérieure à la tension d'éclairage, de préférence, est située sensiblement au milieu entre la tension d'éclairage de la lampe à décharge gazeuse (2,3) et la tension d'amorçage.

3. Ballast selon la revendication 1, **caractérisé en ce que** le ballast (1) comporte une source de tension qui délivre une tension continue prédéterminée.

4. Ballast selon la revendication 1, **caractérisé en ce que** la branche commune (5) fait partie à la fois d'un premier demi-pont pour alimenter une première lampe à décharge gazeuse (2) et d'au moins un demi-pont supplémentaire assurant l'alimentation d'au moins une lampe à décharge (3) supplémentaire.

5. Ballast selon la revendication 1, **caractérisé en ce que** les éléments de découplage (16, 26) sont des diodes.

6. Ballast selon la revendication 1, **caractérisé en ce qu'**un circuit d'amorçage séparé est associé à chacune des lampes à décharge gazeuse (2, 3).

7. Ballast selon la revendication 1, **caractérisé en ce qu'**un moyen de limitation de courant (17, 27) séparé est associé à chacune des lampes à décharge gazeuse (2,3).

8. Ballast selon la revendication 1, **caractérisé en ce qu'**un système de moniteur (41, 51) appartenant au circuit de surveillance (36) est associé à chacune des lampes à décharge gazeuse (2,3).

9. Ballast selon la revendication 1, **caractérisé en ce que** le circuit de surveillance (36) comprend un dispositif d'accumulateur (43, 53) à l'aide duquel peut être maintenu un état bloquant, dans lequel la partie de l'onduleur (8) spécifique à la lampe est amenée par le dispositif de surveillance lors de la détection d'un état de défaut caractérisé.

10. Ballast selon la revendication 1, **caractérisé en ce que** le circuit de surveillance (36) est relié à un dispositif de réinitialisation (44), par lequel l'onduleur (8) peut être réactivé après un blocage partiel consécutif à un défaut au niveau de la lampe à décharge gazeuse (2, 3).

11. Ballast selon la revendication 1, **caractérisé en ce qu'**un circuit de piquage (56, 57) qui assure l'alimentation en courant du circuit de commande (14) est connecté aux branches (6, 7) de l'onduleur (8), spécifiques des lampes (6, 7).

12. Ballast selon la revendication 1, **caractérisé en ce que** le ballast (1) est agencé pour l'amorçage des lampes à décharge gazeuse (2, 3) par une décharge de tension au niveau d'électrodes froides (2a, 2b ; 3a, 3b).
